# EUROPÄISCHE PATENTANMELDUNG

(11) **EP 0 820 796 A2**
(43) Veröffentlichungstag der Anmeldung: **28.01.1998**
(21) Anmeldenummer: 97112192.6
(22) Anmeldetag: 17.07.1997
(51) Int. Cl.: B01D 17/02, B01D 17/04, C02F 1/40, E03F 5/16

(54) **Ölabscheider**

(30) Priorität: 23.07.1996 DE 29612694 U
(71) Anmelder: Ihne, Jessika, 8570 Weinfelden (CH)
(72) Erfinder: Ihne, Heinz, 57234 Wilnsdorf (DE)
(74) Vertreter: Selting, Günther, Dipl.-Ing.

(57) **Zusammenfassung**

Der Ölabscheider weist eine Abscheidekammer (14) auf, der das Flüssigkeitsgemisch über einen Überlauf (13) zugeführt wird. Das schwerere Wasser verläßt die Abscheidekammer (14) durch einen unteren Auslaß (16), während das aufschwimmende Öl von einem Ölauslaß (21) abgeschöpft wird. Um im Wasser enthaltene Ölemulsion zum Aufsteigen zu bringen, enthält die Abscheidekammer (14) eine Koaleszenzvorrichtung (22,23) aus mindestens einer Lochplatte (24). Die Oberfläche der Lochplatte (24) besteht aus oleophilem Kunststoff. An der Lochplatte (24) sammeln sich die Emulsionströpfchen, um sich zu größeren Tropfen zu vereinigen, die dann aufsteigen.

## Beschreibung

Die Erfindung betrifft einen Ölabscheider mit einer Abscheidekammer, die eine Koaleszenzvorrichtung enthält.

Ölabscheider arbeiten nach dem Prinzip der Dichtetrennung, wobei einer Abscheidekammer ein Gemisch aus Öl und Wasser zugeführt wird und das leichtere Öl auf dem schwereren Wasser aufschwimmt. Zusätzlich kann durch einen Überlauf Öl abgeführt werden. Dieses Abscheideprinzip setzt voraus, daß das Öl in dem schwereren Wasser aufsteigt. Eine nicht unerhebliche Menge des Öles ist jedoch in dem Wasser in Form kleinster Tröpfchen temporär emulgiert, die nicht aufsteigen. Es ist bekannt, in der Abscheidekammer eines Ölabscheiders eine Koaleszenzvorrichtung vorzusehen oder eine Koaleszenzvorrichtung nachzuschalten. Diese besteht u.a. aus einer sich horizontal erstreckenden Schicht aus Füllkörpern, die zwischen zwei Drahtgewebelagen untergebracht ist. An den Füllkörpern setzen sich die feinsten Öltröpfchen fest, um sich zu größeren Tropfen zu vereinigen. Diese größeren Tropfen steigen dann an die Oberfläche auf. Eine derartige Koaleszenzvorrichtung nimmt in der Abscheidekammer ein relativ großes Volumen ein, so daß der Ölabscheider eine große Bauform erhält. Bekannt sind auch Koaleszenzvorrichtungen aus einem Filtermaterial oder einem engen Maschengewebe. Solche Koaleszenzvorrichtungen neigen zur Verstopfung, einerseits dadurch, daß die Löcher sich mit Schwebstoffen, Fetten und Öl zusetzen, und andererseits dadurch, daß Fremdstoffe, die in dem Abwasser enthalten sind, die Löcher versperren.

Der Erfindung liegt die Aufgabe zugrunde, einen Ölabscheider mit einer hochwirksamen, ein geringes Volumen aufweisenden Koaleszenzvorrichtung zu schaffen, um dadurch eine kleine Baugröße des Ölabscheiders bei hoher Effektivität zu ermöglichen.

Die Lösung dieser Aufgabe erfolgt erfindungsgemäß mit den im Anspruch 1 angegebenen Merkmalen.

Erfindungsgemäß besteht die Koaleszenzvorrichtung aus mindestens einer Lochplatte, deren Oberfläche aus oleophilem Kunststoff besteht. Versuche haben gezeigt, daß eine derartige Lochplatte die Wirkung hat, Emulsionströpfchen anzuziehen und miteinander zu vereinigen, wobei die entstehenen größeren Tropfen bevorzugt an den Lochkanten abreißen und aufsteigen. Als oleophiles Material eignen sich Kunststoffe, wie PP, PE, und insbesondere Teflon. Diese Materialien ziehen selbst feinste Ölteilchen an, die an dem Material haften bleiben, bis ein größerer Tropfen entstanden ist, dessen Auftriebskraft die Kohäsionskraft des oleophilen Materials übersteigt.

Eine besonders hohe Wirksamkeit der Koaleszenzvorrichtung ergibt sich, wenn die Ränder der Löcher der Lochplatte aus der Plattenebene aufragen. Dabei sind die Lochränder bevorzugt kegelstumpfförmig oder zylindrisch. Während die Koaleszenzwirkung an der gesamten geschlossenen Plattenoberfläche auftritt, wandern die sich akkumulierenden Öltropfen durch die zunehmende Auftriebskraft zu den erhöhten Kanten der Lochränder, so daß die Plattenfläche zur Aufnahme neuer Feinsttröpfchen bereit wird. Von den Lochrändern lösen sich die größeren Tropfen relativ leicht ab, um aufzusteigen.

Die Lochweite der Löcher der Lochplatte beträgt mindestens 3 mm, vorzugsweise mindestens 5 mm, und insbesondere etwa 10 mm. Bei einem Durchmesser von mindestens 3 mm besteht nicht die Gefahr des Verstopfens der Löcher durch anhaftendes Öl. Gegenüber einem dichten Maschengewebe aus runden Drähten und Fasern hat die Lochplatte den Vorteil, daß an den Lochrändern scharfe Kanten bestehen, die das Ablösen der Öltropfen begünstigen.

Die Lochplatte kann insgesamt aus dem oleophilen Kunststoff bestehen, jedoch ist es auch möglich, eine Metallplatte vorzusehen, die außen kunststoffbeschichtet ist.

Gemäß einer bevorzugten Weiterbildung der Erfindung, die selbständige Bedeutung hat, ist der Abscheidekammer eine Vorkammer vorgeordnet, welche eine Füllung aus porösem Mineralgestein enthält. Es hat sich herausgestellt, daß eine solche Füllung bereits hervorragende Koaleszenzeigenschaften hat, und daß somit schon in der Vorkammer eine Vor-Koaleszenzwirkung erreicht wird, bei der der Emulsionsanteil erheblich verringert wird.

Im folgenden wird unter Bezugnahme auf die Zeichnungen ein Ausführungsbeispiel der Erfindung näher erläutert.

Es zeigen:
- Fig. 1: einen schematischen Vertikalschnitt durch den Ölabscheider und
- Fig. 2: einen Schnitt durch eine bevorzugte Ausführungsform der Koaleszenzvorrichtung.

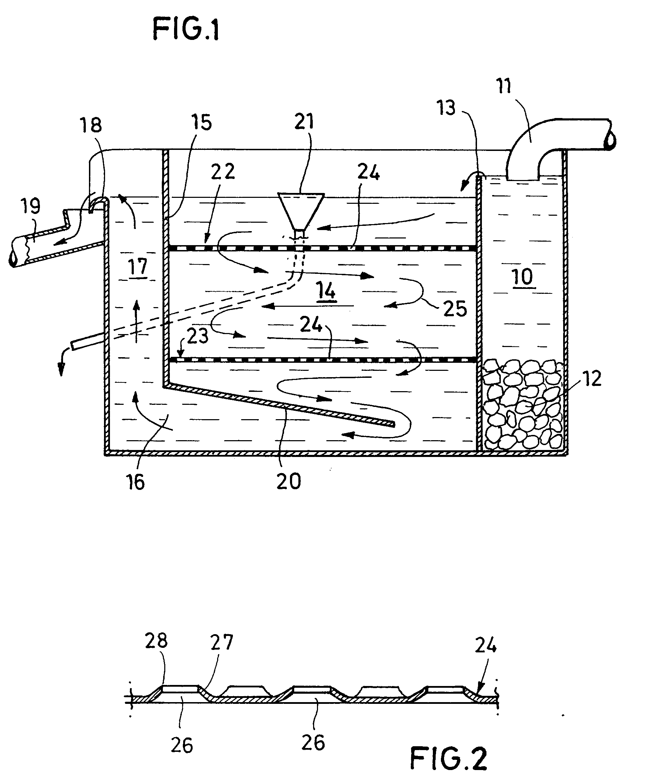

Der Ölabscheider nach Fig. 1 weist eine Vorkammer 10 auf, in die das Öl-Wasser-Gemisch durch einen Einlauf 11 von oben her eingelassen wird. Die Vorkammer 10 enthält eine Füllung 12 aus porösem Mineralgestein, insbesondere Lava. Das von oben her in die Vorkammer 10 eingeleitete Flüssigkeitsgemisch strömt zunächst nach unten, wobei insbesondere die Feinst-Öltröpfchen in die Füllung 12 gelangen, um dann wieder aglomeriert aufzusteigen. Die Füllung 12 bedeckt etwa das untere Drittel der Vorkammer 10. Die Vorkammer 10 weist einen Überlauf 13 auf, der in die Abscheidekammer 14 hineinführt. Die Abscheidekammer 14 wird von einer Trennwand 15 begrenzt, die am unteren Ende einen Durchlaß 16 aufweist, welcher in eine Aufstiegskammer 17 hineinführt. Das schwerere Wasser steigt in der Aufstiegskammer 17 auf und gelangt über einen Überlauf 18 zum Wasserablauf 19. Vom unteren Ende der Trennwand 15 erstreckt sich ein schräg nach unten verlaufendes Blech 20 über etwa zwei Drittel der Länge der Abscheidekammer 14. Dieses Blech endet im Abstand über dem Boden der Abscheidekammer. Es dient der Strömungsführung.

An der Abscheidekammer 14 ist geringfügig über dem Niveau des Überlaufes 18 ein Ölablauf 21 vorgesehen, durch den die aufschwimmende Ölschicht abgeschöpft wird. Der Ölablauf 21 ist mit einem Öltank zur Aufnahme des Öls verbunden.

In der Abscheidekammer 14 sind zwei Koaleszenzvorrichtungen 22,23 in unterschiedlichen Höhen und mit gegenseitigem vertikalem Abstand angeordnet. Jede Koaleszenzvorrichtung besteht aus einer Lochplatte 24, die sich über den gesamten horizontalen Querschnitt der Abscheidekammer 14 erstreckt. Beide Lochplatten 24 sind in solchen Höhenbereichen der Abscheidekammer angeordnet, die im Betrieb vom Wasser (im Gegensatz zur Ölschicht) eingenommen werden. Dieses Wasser enthält feinste Öltröpfchen z.T. in emulgierter Form.

Die Lochplatten 24 bestehen aus oleophilem Material oder sind an ihrer Oberfläche mit oleophiem Material beschichtet. Die Löcher der Lochplatten können jede beliebige Form haben. Sie sind beispielsweise rund oder polygonförmig. Die Lochweite beträgt vorzugsweise etwa 10 mm. Bei dem Ausführungsbeispiel der Fig. 1 sind die Lochplatten ebenflächig, wobei die Lochränder in der Plattenebene liegen. Die Lochränder haben in jedem Fall scharfe Begrenzungskanten. Jede Lochplatte hat zwischen den Löchern ebene Flächenbereiche, deren Flächenanteil mindestens doppelt so qroß ist wie derjenige der Löcher.

Beim Betrieb des Ölabscheiders gelangt das Flüssigkeitsgemisch über den Überlauf 13 in die Abscheidekammer 14. In dieser entsteht ein mäanderförmiger und walzenförmiger Verlauf, der durch die Strömungslinie 25 angedeutet ist. Die Flüssigkeit strömt also nicht nur senkrecht durch die Lochplatten 24 hindurch, sondern sie strömt auch an den Plattenoberflächen entlang. Dabei setzen sich feinste Öltröpfchen an den Lochplatten ab. Diese Öltröpfchen vereinigen sich untereinander und steigen dann in Form größerer Tropfen an die Oberfläche auf.

In Fig. 2 ist eine bevorzugte Ausführungsform der Lochplatte 24 dargestellt. Die Lochplatte hat Löcher 26, deren Lochränder 27 kegelstumpfförmig ausgebildet und nach oben gerichtet sind. Die Lochränder 27 enden in scharfen Kanten 28. Jede Kante 28 umschließt ein Loch mit einem Durchmesser von 10 mm. Die Abstände zwischen den Löchern betragen ebenfalls etwa 10 mm.

Die sich in der Lochplatte 24 ansammelnden feinen Öltröpfchen wandern zu den Lochrändern 27. Die größer gewordenen Tropfen lösen sich relativ leicht von den Kanten 28 ab, um aufzusteigen. Damit wird das Plattenmaterial zur Anziehung neuer Öltröpfchen frei.

## Patentansprüche

1. Ölabscheider mit einer Abscheidekammer (14), die eine Koaleszenzvorrichtung (22,23) enthält,
**dadurch gekennzeichnet,**
daß die Koaleszenzvorrichtung (22,23) aus mindestens einer Lochplatte (24) besteht, deren Oberfläche aus oleophilem Kunststoff besteht.

2. Ölabscheider nach Anspruch 1, dadurch gekennzeichnet, daß die Löcher der Lochplatte aufragende Ränder (27) aufweisen.

3. Ölabscheider nach Anspruch 1 oder 2, dadurch gekennzeichnet, daß die Lochweite der Löcher (26) der Lochplatte (24) mindestens 3 mm, vorzugsweise mindestens 5 mm, und insbesondere etwa 10 mm, beträgt.

4. Ölabscheider, insbesondere nach einem der Ansprüche 1-3, dadurch gekennzeichnet, daß der Abscheidekammer (14) eine Vorkammer (10) vorgeordnet ist, welche eine Füllung (12) aus porösem Mineralgestein enthält.
